# FASCICULE DE BREVET EUROPEEN

(11) **EP 3 723 081 B1**
(45) Date de publication et mention de la délivrance du brevet: **03.05.2023**
(21) Numéro de dépôt: 20165799.6
(22) Date de dépôt: 26.03.2020
(51) Int. Cl.: G10K 11/168, B32B 3/12, B32B 3/26, B32B 27/00, B64C 1/40, G10K 11/172, B64D 33/02, B32B 27/12

(54) **PROCÉDÉ DE FABRICATION D'UNE COUCHE POREUSE D'UNE STRUCTURE D'ABSORPTION ACOUSTIQUE, COUCHE POREUSE D'UNE STRUCTURE D'ABSORPTION ACOUSTIQUE AINSI OBTENUE ET STRUCTURE D'ABSORPTION ACOUSTIQUE COMPRENANT LADITE COUCHE POREUSE**
HERSTELLUNGSVERFAHREN EINER PORÖSEN SCHICHT EINER SCHALLABSORPTIONSSTRUKTUR, SO ERHALTENE PORÖSE SCHICHT EINER SCHALLABSORPTIONSSTRUKTUR UND SCHALLABSORPTIONSSTRUKTUR, DIE DIESE PORÖSE SCHICHT UMFASST
METHOD FOR MANUFACTURING A POROUS LAYER OF AN ACOUSTIC ABSORPTION STRUCTURE, POROUS LAYER OF AN ACOUSTIC ABSORPTION STRUCTURE THUS OBTAINED AND ACOUSTIC ABSORPTION STRUCTURE INCLUDING SAID POROUS LAYER

(30) Priorité: 08.04.2019 FR 1903714
(43) Date de publication de la demande: 14.10.2020
(73) Titulaire: AIRBUS OPERATIONS (S.A.S.), 31060 Toulouse (FR)
(72) Inventeur: RAVISE, Florian, 31060 TOULOUSE Cedex 9 (FR); MERCAT, Florent, 31060 TOULOUSE Cedex 9 (FR)
(74) Mandataire: Jardel, Marc Henry Philippe

(56) Documents cités:
- US-A1- 2006 088 690
- US-A1- 2013 040 117
- US-A1- 2017 341 186

## Description

La présente demande se rapporte à un procédé de fabrication d'une couche poreuse d'une structure d'absorption acoustique, à une couche poreuse d'une structure d'absorption acoustique ainsi obtenue ainsi qu'à une structure d'absorption acoustique comprenant une telle couche poreuse.

Le document US 2017/341186A1 divulgue une structure d'absorption acoustique selon l'art antérieur, le document US 2013/040117A1 divulgue une paroi en composite selon l'art antérieur et le document US 2006/088690 A1 divulgue une paroi de protection contre les ondes électromagnétiques selon l'art antérieur.

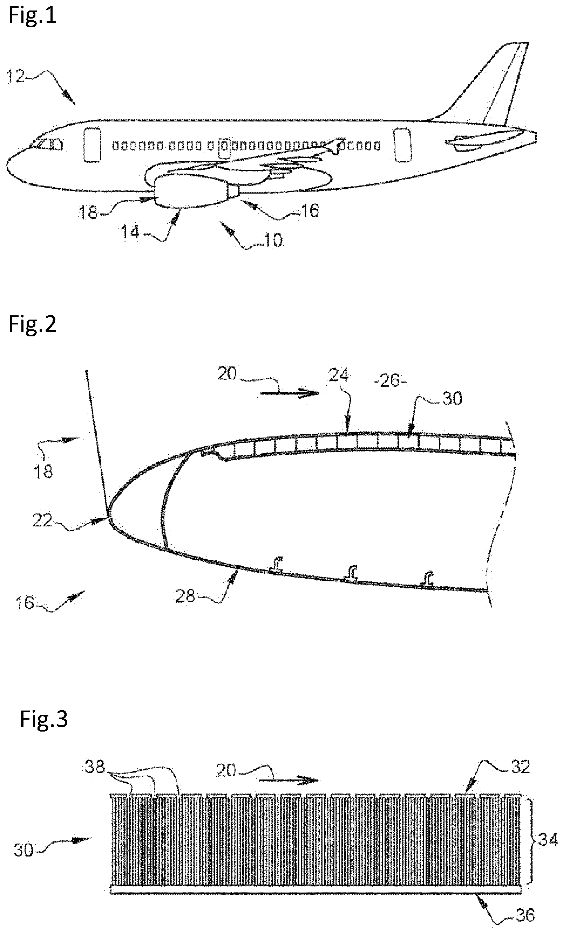

Selon un mode de réalisation visible sur la figure 1, un ensemble propulsif 10 d'un aéronef 12 comprend une nacelle 14 ainsi qu'une turbomachine 16, positionnée à l'intérieur de la nacelle 14. Cette dernière comprend une entrée d'air 18 permettant de canaliser un flux d'air 20 en direction de la turbomachine 16, comme illustré sur la figure 2. Cette entrée d'air 18 comprend une lèvre 22 prolongée à l'intérieur par une paroi intérieure 24 délimitant un conduit intérieur 26 canalisant le flux d'air 20 en direction de la turbomachine 16 et à l'extérieur par une paroi extérieure 28. Certaines surfaces de la nacelle 14 et de la turbomachine 16 comprennent des structures d'absorption acoustique 30 pour atténuer les nuisances sonores.

Selon un premier mode de réalisation visible sur la figure 3, une structure d'absorption acoustique 30 comprend une couche poreuse 32 en contact avec le flux d'air 20 dans lequel se propagent des ondes sonores, une couche alvéolaire 34 et une couche réflectrice 36. Selon un autre mode de réalisation, une structure d'absorption acoustique comprend une première couche poreuse en contact avec le flux d'air 20, deux couches alvéolaires, une deuxième couche poreuse appelée septum intercalée entre les deux couches alvéolaires ainsi qu'une couche réflectrice.

Chaque couche poreuse 32 est une plaque métallique ou en matériau composite, d'épaisseur comprise entre 0,1 mm et 5 mm, présentant une pluralité de trous 38 traversants ayant un diamètre de 0,7 à 2 mm. Pour réduire la traînée induite par les trous 38, ces derniers doivent avoir un diamètre le plus réduit possible et doivent être prévus en grand nombre pour obtenir un taux de surface ouverte pouvant être supérieur à 10%. Lorsque la couche poreuse 32 est en matériau composite, elle comprend une pluralité de fibres réparties de manière homogène dans la matrice de résine. Selon un premier mode opératoire, les trous 38 sont réalisés par perçage mécanique. Compte tenu du grand nombre de trous 38, il est nécessaire de prévoir plusieurs dizaines d'heures de perçage pour obtenir une couche poreuse 32.

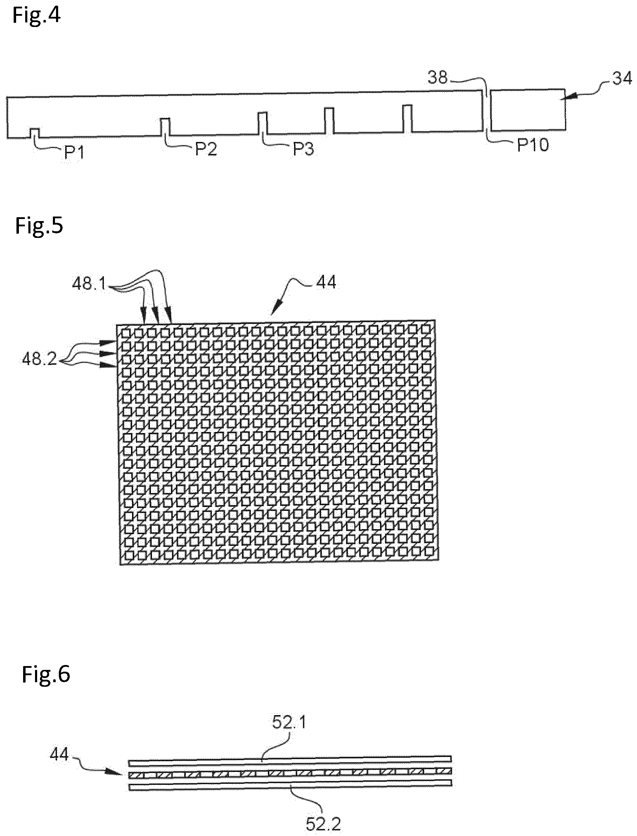

Selon un deuxième mode opératoire visible sur la figure 4, les trous 38 sont réalisés par ablation en utilisant un faisceau laser. Pour éviter les risques d'endommagement de la couche poreuse 32 par brûlure, les trous 38 sont réalisés en plusieurs passes P1 à P10 afin de réduire l'échauffement. Le nombre de passes pouvant atteindre dix et compte tenu du grand nombre de trous 38, ce deuxième mode opératoire a une durée de réalisation aussi importante que le premier.

La présente invention vise à remédier à tout ou partie des inconvénients de l'art antérieur en proposant une solution réduisant le temps de réalisation d'une couche poreuse.

A cet effet, l'invention a pour objet un procédé de fabrication d'une couche poreuse d'une structure d'atténuation acoustique, selon l'une des revendications 1 à 11.

Ce procédé de fabrication permet d'obtenir une couche poreuse à l'aide d'un faisceau laser avec un faible nombre de passes, réduisant ainsi la durée de fabrication de la couche poreuse.

D'autres caractéristiques et avantages ressortiront de la description de l'invention qui va suivre, description donnée à titre d'exemple uniquement, en regard des dessins annexés parmi lesquels :
[Fig. 1] est une vue latérale d'un aéronef,
[Fig. 2] est une coupe longitudinale d'une entrée d'air d'une nacelle d'aéronef,
[Fig. 3] est une coupe d'une structure d'atténuation acoustique qui illustre un mode de réalisation,
[Fig. 4] est une coupe d'une couche poreuse montrant différentes passes nécessaires pour réaliser un trou à l'aide d'un faisceau laser qui illustre un mode opératoire de l'art antérieur,
[Fig. 5] est une vue de face d'une trame structurale d'une couche poreuse qui illustre un mode de réalisation de l'invention,
[Fig. 6] est une coupe transversale d'une trame structurale intercalée entre deux films de résine qui illustre un premier mode de réalisation de l'invention,
[Fig. 7] est une vue de face d'une couche pleine comportant la trame structurale visible sur la figure 5 qui illustre le premier mode de réalisation de l'invention,
[Fig. 8] est une coupe transversale de la couche pleine selon la ligne VIII-VIII de la figure 7,
[Fig. 9] est une coupe transversale de la couche pleine visible sur la figure 8 après une première passe de perçage à l'aide d'un faisceau laser qui illustre le premier mode de réalisation de l'invention,
[Fig. 10] est une coupe transversale d'une couche poreuse obtenue à partir de la couche pleine visible sur la figure 8 qui illustre le premier mode de réalisation de l'invention,
[Fig. 11] est une coupe transversale d'une couche poreuse qui illustre un deuxième mode de réalisation de l'invention, et
[Fig. 12] est une vue de face de la couche poreuse visible sur la figure 11 partiellement perforée.

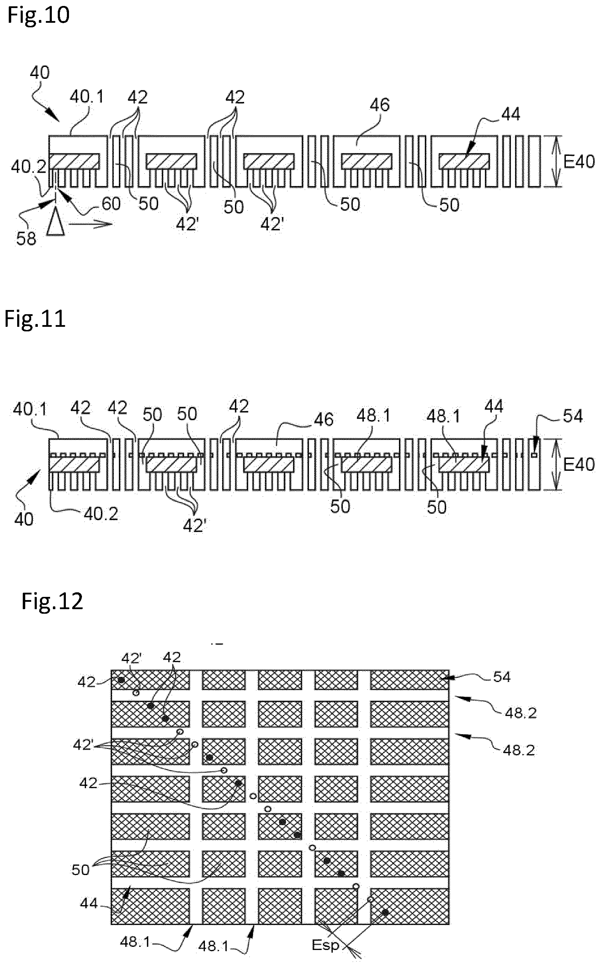

Sur les figures 10 et 11, on a représenté en coupe une couche poreuse 40 présentant des première et deuxième surfaces 40.1, 40.2, sensiblement parallèles, ainsi que des trous 42 traversants débouchant au niveau des première et deuxième surfaces 40.1, 40.2. Selon une configuration, la couche poreuse 40 a une épaisseur de couche E40 (distance entre les première et deuxième surfaces 40.1, 40.2) comprise entre 0,4 mm et 1,5 mm.

En fonctionnement, la couche poreuse 40 est intégrée dans une structure d'atténuation acoustique, telle qu'illustrée sur la figure 3 par exemple, la première surface 40.1 étant en contact avec un flux d'air et la deuxième surface 40.2 étant reliée à une couche alvéolaire. En variante, la couche poreuse 40 pourrait être intercalée entre deux couches alvéolaires d'une structure d'atténuation acoustique.

Selon une application, une structure d'atténuation acoustique intégrant au moins une couche poreuse 40 est positionnée au niveau d'une surface d'une nacelle ou d'une turbomachine d'un aéronef. Bien entendu, l'invention n'est pas limitée à cette application.

La couche poreuse 40 comprend au moins une trame structurale 44 noyée dans une matrice de résine 46. La trame structurale 44 est métallique ou en matériau composite.

La trame structurale 44 comprend des premières bandes de renfort 48.1, parallèles entre elles et orientées selon une première direction ainsi que des deuxièmes bandes de renfort 48.2 parallèles entre elles et orientées selon une deuxième direction sécante à la première direction. Selon une configuration, les première et deuxième directions sont perpendiculaires. Bien entendu, l'invention n'est pas limitée à cet agencement.

Selon un exemple ne faisant pas partie de la présente invention, la trame structurale 44 est de type tissé, les premières et deuxièmes bandes de renfort 48.1, 48.2 s'entrecroisant. Selon un autre exemple ne faisant pas partie de la présente invention, la trame structurale 44 est de type drapé, les premières bandes de renfort 48.1 étant positionnées au-dessus ou au-dessous des deuxièmes bandes de renfort 48.2.

Les première et deuxième bandes de renfort 48.1, 48.2 ont la même épaisseur E. En variante, les premières et deuxièmes bandes de renfort 48.1, 48.2 pourraient avoir des épaisseurs différentes.

Selon une configuration, les premières et deuxièmes bandes de renfort 48.1, 48.2 présentent une épaisseur E comprise entre 0,4 et 1,5 mm.

Les premières et deuxièmes bandes de renfort 48.1, 48.2 ont la même largeur L. En variante, les premières et deuxièmes bandes de renfort 48.1, 48.2 pourraient avoir des largeurs différentes. Selon une configuration, les premières et deuxièmes bandes de renfort 48.1, 48.2 présentent une largeur L comprise entre 1 et 7 mm.

Les premières bandes de renfort 48.1 sont régulièrement espacées entre elles d'une distance D. En variante, les premières bandes de renfort 48.1 ne sont pas régulièrement espacées. Selon une configuration, la distance D entre les premières bandes de renfort 48.1 est approximativement égale à la largeur L des premières bandes de renfort 48.1. Les deuxièmes bandes de renfort 48.2 sont régulièrement espacées entre elles. En variante, les deuxièmes bandes de renfort 48.2 ne sont pas régulièrement espacées. Selon une configuration, la distance entre les deuxièmes bandes de renfort 48.2 est approximativement égale à la largeur des deuxièmes bandes de renfort 48.2.

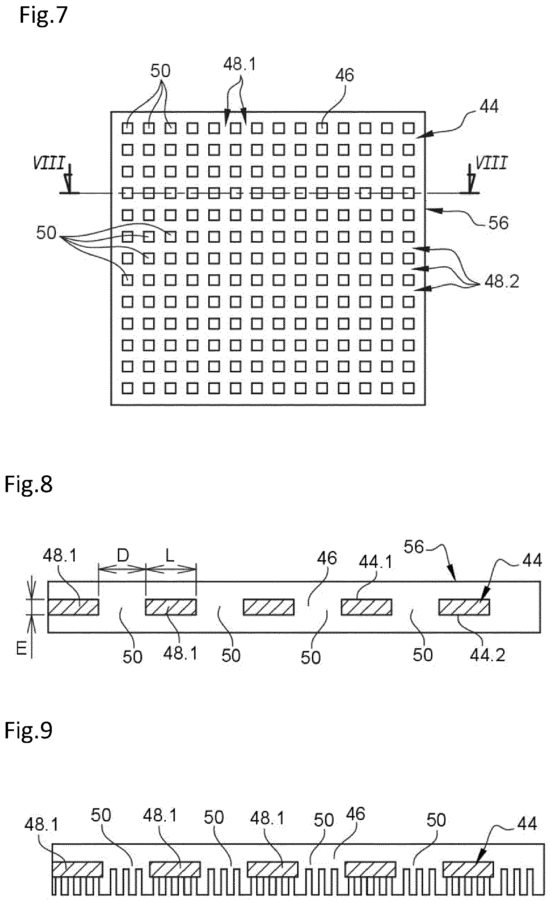

Selon le mode de réalisation visible sur la figure 7, les premières bandes de renfort 48.1 sont régulièrement espacées entre elles d'une distance D, comme les deuxièmes bandes de renfort 48.2. Selon une configuration, la distance D entre les premières bandes de renfort 48.1 (ou entre les deuxièmes bandes de renfort 48.2) est comprise entre 2 et 10 mm.

Quel que soit le mode de réalisation, chaque trame structurale 44 délimite des zones sans bandes de renfort 50 situées entre les premières et deuxièmes bandes de renfort 48.1, 48.2.

Selon un exemple ne faisant pas partie de la présente invention, chaque première ou deuxième bande de renfort 48.1, 48.2 est un ensemble de fibres continues sur toute la longueur de la première ou deuxième bande de renfort 48.1, 48.2. Ces fibres peuvent être regroupées en une ou plusieurs mèches de fibres, en une ou plusieurs bandes de fibres ou tout autre arrangement de fibres. Les fibres peuvent être organiques ou minérales, comme être par exemple en carbone, en verre, en kevlar ou autres. Selon d'autres modes de réalisation, les premières et deuxièmes bandes de renfort 48.1, 48.2 peuvent être métalliques.

Selon un mode de réalisation, la couche poreuse 40 comprend une unique trame structurale 44. En variante, la couche poreuse 40 comprend plusieurs trames structurales 44 identiques, superposées de manière à ce que les zones sans bandes de renfort 50, soient positionnées les unes sur les autres.

La trame structurale 44 ou l'ensemble de trames structurales superposées 44 présente une première face extérieure 44.1 et une deuxième face extérieure 44.2.

La (ou les) trame(s) structurale(s) 44 permet(tent) de faire passer des efforts sur l'ensemble de la couche poreuse 40, leur nombre étant déterminé en fonction des efforts à faire passer.

La résine de la matrice 46 peut être thermoplastique ou thermodurcissable.

Selon un mode de réalisation, la matrice de résine 46 recouvre les première et deuxième faces extérieures 44.1, 44.2 de la (ou des) trame(s) structurale(s) 44. Dans ce cas, la trame structurale 44 ou l'ensemble de trames structurales 44 est positionné(e) entre deux films de résine 52.1, 52.2, comme illustré sur la figure 6.

Selon un autre mode de réalisation, la matrice de résine 46 recouvre seulement une des première et deuxième faces extérieures 44.1, 44.2 de la (ou des) trame(s) structurale(s) 44. Dans ce cas, un film de résine est plaqué contre une des première et deuxième faces extérieures 44.1, 44.2 de la (ou des) trame(s) structurale(s) 44.

Lorsque la couche poreuse 40 comprend plusieurs trames structurales 44, au moins un film de résine peut être intercalé entre les trames structurales 44.

Quel que soit le mode de réalisation, les zones sans bandes de renfort 50, situées entre les premières et deuxièmes bandes de renfort 48.1, 48.2, sont remplies de résine.

Selon un autre mode de réalisation visible sur les figures 11 et 12, la couche poreuse 40 comprend au moins un film de renfort 54 positionné entre deux trames structurales 44 ou plaqué contre une des première et deuxième faces extérieures 44.1, 44.2 de la (ou des) trame(s) structurale(s) 44. Selon une configuration, ce film de renfort 54 comprend des fibres discontinues ou des microfibres ou un mat de verre.

Le procédé de fabrication d'une couche poreuse 40 comprend une première étape de réalisation d'une couche pleine 56 (sans les trous 42) comportant au moins une trame structurale 44, présentant des premières et deuxièmes bandes de renfort 48.1, 48.2 espacées entre elles afin de délimiter des zones sans bandes de renfort 50, ladite trame structurale 44 étant noyée dans une matrice de résine 46 remplissant au moins les zones sans bandes de renfort 50. La couche pleine 56 est conformée en fonction de la géométrie de la couche poreuse 40 à réaliser. Ainsi, la couche pleine 56 peut être plane ou courbe.

Selon un mode opératoire, la (ou les) trame(s) structurales 44, le (ou les) film(s) de résine 52.1, 52.2 sont superposés les unes sur les autres sur une surface de dépose conformée selon la géométrie de la couche poreuse à réaliser, puis sont consolidés en les soumettant à un cycle de température et de pression.

Le procédé de fabrication comprend également une étape de réalisation des trous 42 dans la couche pleine 56 à l'aide d'un faisceau laser 58. Selon un mode opératoire, le faisceau laser 58 se déplace par rapport à la couche pleine 56 fixe. Selon un autre mode opératoire, la couche pleine 56 se déplace par rapport au faisceau laser 58 fixe.

Le faisceau laser 58 comprend des paramètres de réglage ajustés pour réaliser des trous 42 dont au moins une des dimensions est inférieure ou égale à 1mm, de préférence supérieure ou égale à 0,05mm et inférieure ou égale à 1mm.

Selon un premier mode de réalisation les trous 42 ont un diamètre de dimension inférieure ou égale à 1mm, de préférence supérieure ou égale à 0,1mm et inférieure ou égale à 1mm.

Selon un deuxième mode de réalisation les trous 42 ont un diamètre de dimension inférieure ou égale à 1mm, de préférence supérieure ou égale à 0,05mm et inférieure ou égale à 1mm.

Selon un exemple ne faisant pas partie de la présente invention, les trous 42 sont oblongs, c'est-à-dire qu'ils sont plus longs que larges. Selon une première alternative la dimension de la largeur est inférieure ou égale à 1mm, de préférence supérieure ou égale à 0,1mm et inférieure ou égale à 1mm. Selon une deuxième alternative la dimension de la largeur est inférieure ou égale à 1mm, de préférence supérieure ou égale à 0,05mm et inférieure ou égale à 1mm.

Les paramètres de réglage comprennent, de manière non limitative, une puissance, une focalisation, une fréquence, une longueur d'onde,...

A titre d'exemple non limitatif, le laser peut être un laser à impulsions ultra courtes, « Ultra Short Pulse » en anglais.

Le faisceau laser 58 impacte successivement la couche pleine 56 au niveau de zones d'impact 60. Les paramètres de réglage du faisceau laser 58 sont ajustés de manière à ce que la température au niveau des zones d'impact 60 soit maintenue dans une plage de températures supérieures à une température de sublimation de la résine de la matrice 46.

Selon un premier mode de réglage, les paramètres de réglage du faisceau laser 58 sont ajustés de manière à ce que la température au niveau des zones d'impact 60 soit maintenue dans une plage de températures inférieures à une température d'altération des fibres de la (ou des) trame(s) structurale(s) 44.

La trame structurale 44 ou l'ensemble des trames structurales 44 présente une épaisseur de trame E. Les paramètres de réglage du faisceau laser 58 sont ajustés en fonction des épaisseurs de trame E et de couche E40 de sorte que le faisceau laser 58 réalise, en au plus trois passes, des trous 42 traversants au niveau des zones sans bandes de renfort 50 et des trous borgnes 42' au niveau des premières et deuxièmes bandes de renfort 48.1, 48.2 n'altérant pas ou altérant faiblement leurs caractéristiques mécaniques.

A chaque passage, le faisceau laser 58 permet de réaliser un perçage de plusieurs centaines de micromètres dans les zones sans bandes de renfort 50.

Selon un exemple ne faisant pas partie de la présente inventionvisible sur les figures 8 à 10, il est possible de réaliser les trous 42 traversants en deux passes. Si l'épaisseur E40 de la couche poreuse 40 ne dépasse pas un certain seuil, il est possible de réaliser les trous 42 traversants en une seule passe et de passer directement de la figure 8 à la figure 10.

Le faisceau laser 58 est déplacé, au-dessus de toute la surface de la couche pleine 56, de manière à réaliser successivement par balayage des trous 42, 42', comme illustré sur la figure 12. L'espacement Esp entre deux trous 42, 42' est déterminé de manière à ce que le taux de surface ouverte TSO soit compris entre 4 et 18%. A titre indicatif, l'espacement Esp est compris entre 1 et 4 fois le diamètre des trous 42.

Selon l'invention, les trous 42 traversants, situés dans les zones sans bandes de renfort 50, sont totalement débouchants et ne sont pas encombrés de fibres si bien que la surface ouverte pour le calcul du taux de surface ouverte TSO est égale à la somme des sections de perçage des trous 42 traversants. Ainsi, à sections de perçage et à taux de surface ouverte TSO identiques, la couche poreuse 40 comprend un moins grand nombre de trous 42 traversants dans la mesure où pour chacun d'eux la totalité de la section de perçage est efficace et non encombrée de fibres.

Selon un autre mode opératoire, la géométrie de la (ou des) trame(s) structurale(s) étant connue, il est possible de réaliser le balayage du faisceau laser 58 uniquement à l'aplomb des zones sans bandes de renfort 50.

L'invention permet d'obtenir un taux de surface ouverte homogène sur l'ensemble de la couche poreuse 50 et donc d'optimiser le traitement acoustique. Les trous 42 traversants ayant un diamètre inférieur à 1 mm, l'impact sur les performances aérodynamique est limité.

## Revendications

1. Procédé de fabrication d'une couche poreuse d'une structure d'atténuation acoustique, le procédé comprenant une première étape de réalisation d'une couche pleine (56) comportant au moins une trame structurale (44) présentant des premières bandes de renfort (48.1) parallèles et espacées entre elles ainsi que des deuxièmes bandes de renfort (48.2) parallèles et espacées entre elles et sécantes avec les premières bandes de renfort (48.1), les premières et deuxièmes bandes de renfort (48.1, 48.2) délimitant des zones sans bandes de renfort (50), et une deuxième étape de réalisation de trous (42) traversants au niveau des zones sans bandes de renfort (50) de la couche pleine (56), le procédé étant **caractérisé en ce que** :
ladite trame structurale (44) étant noyée dans une matrice (46) de résine remplissant au moins les zones sans bandes de renfort (50), et
lesdits trous sont réalisés à l'aide d'un faisceau laser (58) paramétré pour réaliser des trous (42) et pour qu'une température au niveau des zones d'impact (60) du faisceau laser (58) soit maintenue dans une plage de températures supérieures à une température de sublimation de la résine de la matrice (46).

2. Procédé de fabrication d'une couche poreuse selon la revendication 1, **caractérisé en ce que** le faisceau laser (58) est paramétré de manière à ce que la température au niveau des zones d'impact (60) soit maintenue dans une plage de températures inférieures à une température d'altération des fibres de la (ou des) trame(s) structurale(s) (44).

3. Procédé de fabrication d'une couche poreuse selon l'une des revendications précédentes, **caractérisé en ce que** les trous (42) traversants sont réalisés par un balayage du faisceau laser (58) uniquement à l'aplomb des zones sans bandes de renfort (50).

4. Procédé de fabrication d'une couche poreuse selon l'une des revendications précédentes, **caractérisé en ce que** la couche pleine (56) est obtenue en empilant au moins une trame structurale (44) et au moins un film de résine (52.1, 52.2) sur une surface de dépose, conformée selon la géométrie de la couche poreuse à réaliser, puis en les consolidant.

5. Procédé de fabrication d'une couche poreuse selon l'une des revendications précédentes, **caractérisé en ce que** les trous (42) traversants sont espacés de manière à ce que la couche poreuse présente un taux de surface ouverte compris entre 4 et 18 %.

6. Procédé de fabrication d'une couche poreuse selon l'une des revendications précédentes, **caractérisé en ce que** les premières et deuxièmes bandes de renfort (48.1, 48.2) sont régulièrement espacées d'une distance (D) comprise entre 2 et 10 mm.

7. Procédé de fabrication d'une couche poreuse selon l'une des revendications précédentes, **caractérisé en ce que** les premières et deuxièmes bandes de renfort (48.1, 48.2) ont une largeur (L) comprise entre 1 et 7 mm.

8. Procédé de fabrication d'une couche poreuse selon l'une des revendications précédentes, **caractérisé en ce que** les premières et deuxièmes bandes de renfort (48.1, 48.2) ont une épaisseur (E) comprise entre 0,4 et 1,5 mm.

9. Procédé de fabrication d'une couche poreuse selon l'une des revendications précédentes, **caractérisé en ce que** le faisceau laser (58) est paramétré pour réaliser des trous (42) dont au moins une des dimensions est inférieure à 1 mm.

10. Couche poreuse pour structure d'atténuation acoustique obtenue à partir du procédé selon l'une des revendications précédentes.

11. Structure d'atténuation acoustique comportant au moins une couche poreuse selon la revendication 10.

## Patentansprüche

1. Verfahren zur Herstellung einer porösen Schicht einer Schalldämpfungsstruktur, wobei das Verfahren einen ersten Schritt des Ausführens einer vollen Schicht (56) umfasst, die mindestens ein strukturelles Raster (44) beinhaltet, das erste Aussteifungsstreifen (48.1), die parallel und untereinander beabstandet sind, sowie zweite Aussteifungsstreifen (48.2), die parallel und untereinander beabstandet sind und sich mit den ersten Aussteifungsstreifen (48.1) schneiden, aufweist, wobei die ersten und zweiten Aussteifungsstreifen (48.1, 48.2) Zonen ohne Aussteifungsstreifen (50) begrenzen, und einen zweiten Schritt des Ausführens von durchgehenden Löchern (42) im Bereich der Zonen ohne Aussteifungsstreifen (50) der vollen Schicht (56),
wobei das Verfahren **dadurch gekennzeichnet ist, dass** das strukturelle Raster (44) in eine Matrix (46) aus Harz eingebettet ist, die mindestens die Zonen ohne Aussteifungsstreifen (50) füllt, und
die Löcher mittels eines Laserstrahls (58) ausgeführt werden, der parametriert ist, um Löcher (42) auszuführen, und damit eine Temperatur im Bereich der Auftreffzonen(60) des Laserstrahls (58) in einer Spanne von Temperaturen gehalten wird, die über einer Sublimationstemperatur des Harzes der Matrix (46) liegen.

2. Verfahren zur Herstellung einer porösen Schicht nach Anspruch 1, **dadurch gekennzeichnet, dass** der Laserstrahl (58) so parametriert ist, dass die Temperatur im Bereich der Auftreffzonen (60) in einer Spanne von Temperaturen gehalten wird, die unter einer Schädigungstemperatur der Fasern des (oder der) strukturellen Raster(s) (44) liegen.

3. Verfahren zur Herstellung einer porösen Schicht nach einem der vorhergehenden Ansprüche, **dadurch gekennzeichnet, dass** die durchgehenden Löcher (42) durch ein Überstreichen des Laserstrahls (58) nur lotrecht zu den Zonen ohne Aussteifungsstreifen (50) ausgeführt werden.

4. Verfahren zur Herstellung einer porösen Schicht nach einem der vorhergehenden Ansprüche, **dadurch gekennzeichnet, dass** die volle Schicht (56) erhalten wird, indem mindestens ein strukturelles Raster (44) und mindestens ein Harzfilm (52.1, 52.2) auf eine Auflagefläche gestapelt werden, die gemäß der Geometrie der auszuführenden porösen Schicht ausgeformt ist, und sie anschließend verfestigt werden.

5. Verfahren zur Herstellung einer porösen Schicht nach einem der vorhergehenden Ansprüche, **dadurch gekennzeichnet, dass** die durchgehenden Löcher (42) so beabstandet sind, dass die poröse Schicht einen Anteil offener Oberfläche zwischen 4 und 18 % aufweist.

6. Verfahren zur Herstellung einer porösen Schicht nach einem der vorhergehenden Ansprüche, **dadurch gekennzeichnet, dass** die ersten und zweiten Aussteifungsstreifen (48.1, 48.2) regelmäßig um einen Abstand (D) zwischen 2 und 10 mm beabstandet sind.

7. Verfahren zur Herstellung einer porösen Schicht nach einem der vorhergehenden Ansprüche, **dadurch gekennzeichnet, dass** die ersten und zweiten Aussteifungsstreifen (48.1, 48.2) eine Breite (L) zwischen 1 und 7 mm haben.

8. Verfahren zur Herstellung einer porösen Schicht nach einem der vorhergehenden Ansprüche, **dadurch gekennzeichnet, dass** die ersten und zweiten Aussteifungsstreifen (48.1, 48.2) eine Dicke (E) zwischen 0,4 und 1,5 mm haben.

9. Verfahren zur Herstellung einer porösen Schicht nach einem der vorhergehenden Ansprüche, **dadurch gekennzeichnet, dass** der Laserstrahl (58) parametriert ist, um Löcher (42) auszuführen, bei denen mindestens eine der Abmessungen kleiner als 1 mm ist.

10. Poröse Schicht für eine Schalldämpfungsstruktur, die anhand des Verfahrens nach einem der vorhergehenden Ansprüche erhalten wird.

11. Schalldämpfungsstruktur, die mindestens eine poröse Schicht nach Anspruch 10 beinhaltet.

## Claims

1. Method for manufacturing a porous layer of an acoustic attenuation structure, the method comprising a first step of production of a solid layer (56) comprising at least one structural frame (44) having first reinforcing bands (48.1) that are parallel and spaced apart from one another and second reinforcing bands (48.2) that are parallel and spaced apart from one another and secant with the first reinforcing bands (48.1), the first and second reinforcing bands (48.1, 48.2) delimiting zones without reinforcing bands (50), and a second step of production of through-holes (42) in the zones without reinforcing bands (50) of the solid layer (56),
the method being **characterized in that**:
said structural frame (44) being embedded in a matrix (46) of resin filling at least the zones without reinforcing bands (50), and
said holes are produced using a laser beam (58) parameterized to produce holes (42) and for a temperature in the impact zones (60) of the laser beam (58) to be maintained within a range of temperatures higher than a sublimation temperature of the resin of the matrix (46).

2. Method for manufacturing a porous layer according to Claim 1, **characterized in that** the laser beam (58) is parameterized so that the temperature in the impact zones (60) is maintained within a range of temperatures lower than a temperature of alteration of the fibres of the structural frame or frames (44).

3. Method for manufacturing a porous layer according to one of the preceding claims, **characterized in that** the through-holes (42) are produced by a scanning of the laser beam (58) only aplomb with the zones without reinforcing bands (50).

4. Method for manufacturing a porous layer according to one of the preceding claims, **characterized in that** the solid layer (56) is obtained by stacking at least one structural frame (44) and at least one resin film (52.1, 52.2) on a lay surface, conformed according to the geometry of the porous layer to be produced, then by consolidating them.

5. Method for manufacturing a porous layer according to one of the preceding claims, **characterized in that** the through-holes (42) are spaced apart so that the porous layer has an open surface ratio of between 4 and 18%.

6. Method for manufacturing a porous layer according to one of the preceding claims, **characterized in that** the first and second reinforcing bands (48.1, 48.2) are evenly spaced apart by a distance (D) of between 2 and 10 mm.

7. Method for manufacturing a porous layer according to one of the preceding claims, **characterized in that** the first and second reinforcing bands (48.1, 48.2) have a width (L) of between 1 and 7 mm.

8. Method for manufacturing a porous layer according to one of the preceding claims, **characterized in that** the first and second reinforcing bands (48.1, 48.2) have a thickness (E) of between 0.4 and 1.5 mm.

9. Method for manufacturing a porous layer according to one of the preceding claims, **characterized in that** the laser beam (58) is parameterized to produce holes (42) of which at least one of the dimensions is less than 1 mm.

10. Porous layer for an acoustic attenuation structure obtained from the method according to one of the preceding claims.

11. Acoustic attenuation structure comprising at least one porous layer according to Claim 10.
